# EUROPEAN PATENT APPLICATION

(11) **EP 2 629 233 A1**
(43) Date of publication of application: **21.08.2013**
(21) Application number: 13154055.1
(22) Date of filing: 05.02.2013
(51) Int. Cl.: G06F 21/60, G06F 3/12, H04L 29/08, H04L 29/06

(54) **Apparatus, system, and method of relaying data, and recording medium storing data relay control program**

(30) Priority: 15.02.2012 JP 2012030203
(71) Applicant: Ricoh Company, Ltd., Tokyo 143-8555 (JP)
(72) Inventor: Shimomoto, Ryoh, Ohta-ku, Tokyo 143-8555 (JP)
(74) Representative: Maury, Richard Philip

(57) **Abstract**

An apparatus, system, method, and control program stored in a carrier medium, each of which allows an operation device (40) connected to a first network (102) to obtain electronic data stored in an image processing apparatus (30) that resides on a second network (104) via a firewall (106) are described. In a data relay system, a server apparatus (10) disposed on the first network (102) and a client apparatus (20) disposed on the second network (104) communicate with each other to relay a request for obtaining data that is received from the operation device (40) connected to the first network (102), to the image processing apparatus (30) that resides on the second network (104). The electronic data stored in the image processing apparatus (30) is relayed via the data relay system to the operation device (40).

## Description

### BACKGROUND

### Field

The present invention generally relates to an apparatus, system, and method of relaying data, and a recording medium storing a data relay control program.

### Background

Japanese Patent Application Publication No. JP-2006-261802-A discloses a multifunctional peripheral (MFP) having the document box function, which stores electronic data in a memory of the MFP for later use. For example, scan data obtained through scanning or copying, or facsimile data obtained from a facsimile, may be stored in the memory referred to as a document box. The electronic data stored in the document box of the MFP may be downloaded onto a personal computer provided on a local area network (LAN) according to a user instruction. In some cases, however, the user may want to access the MFP using a portable device from a location remote from the office where the MFP is located, through a public network. This requires the portable device to communicate with the MFP, which is provided on a private network such as the LAN, through a firewall. While it is technically possible to provide, on the public network, a dedicated server that stores electronic data as it is registered to the document box, it is not preferable in terms of security to keep the electronic data on the public network.

### SUMMARY

In view of the above, one aspect of the invention is to provide an apparatus, system, and method of allowing an operation device connected to a first network to obtain electronic data stored in an image processing apparatus that resides on a second network, and a recording medium storing a control program that causes the apparatus or system to relay a request for obtaining data that is received from the operation device connected to the first network to the image processing apparatus that resides on the second network.

For example, a data relay system may be provided, which allows an operation device, such as a portable device, connected to a first network to obtain electronic data stored in an image processing apparatus disposed on a second network, via a firewall. In one example, the data relay system includes a server apparatus disposed on the first network and a client apparatus disposed on the second network, which communicate with each other to relay a request for obtaining data that is received from the portable device connected to the first network to the image processing apparatus that resides on the second network, and relay the electronic data stored in the image processing apparatus in response to the request for obtaining data.

For example, the server apparatus, which may be one or more information processing apparatuses, may perform a method of relaying electronic data. The method includes: receiving, from an operation device connected to the first network, a data obtaining request for obtaining electronic data stored in an image processing apparatus disposed on the second network; storing the data obtaining request in a memory on the first network; transferring, in response to a request for obtaining the data obtaining request sent from a client apparatus disposed on the second network, the data obtaining request stored in the memory to the client apparatus; and transmitting the electronic data to the operation device that sends the data obtaining request stored in the memory.

In one example, the server apparatus includes a data request manager configured to receive, from the operation device, a data obtaining request for obtaining electronic data stored in an image processing apparatus disposed on the second network and to store the data obtaining request in a storage area; a data request transfer unit configured to transfer the data obtaining request stored in the storage area to the client apparatus, in response to a request for obtaining the data obtaining request received from the client apparatus; and a data transfer unit configured to specify the operation device that sends the data obtaining request stored in the storage area and to transmit the electronic data to the specified operation device. The client apparatus, which may be one or more information processing apparatuses, includes a data request obtainer configured to transmit the request for obtaining the data obtaining request to the server apparatus and to obtain the data obtaining request stored in the storage area from the server apparatus; a data obtainer configured to obtain the electronic data stored in the image processing apparatus based on the data obtaining request obtained from the server apparatus; and a data transmit request unit configured to send the electronic data to the server apparatus.

In one example, the data transmit request unit of the client apparatus generates a data transmit request for requesting transmit of the electronic data to cause the electronic data be sent to the server.

The server apparatus may be optionally provided with a request interpreter configured to determine a type of a request received from an outside apparatus. The type of the request may be determined based on path information of a header section of a HTTP request, or based on a key and a value of a header section of a HTTP request.

The server apparatus may be optionally provided with a user authenticator configured to authenticate a user of the operation device based on user authentication information included in the data obtaining request. The data request manager stores the data obtaining request received from the operation device in a storage area designated to the authenticated user.

In one example, the client apparatus, which may be implemented by one or more information processing apparatuses, may perform a method of relaying electronic data. The method includes: transmitting a request for obtaining a data obtaining request to a server apparatus disposed on a first network; obtaining the data obtaining request stored in a memory disposed on the first network, wherein the data obtaining request is transmitted from an operation device connected to the first network and requests obtaining electronic data stored in an image processing apparatus disposed on a second network different from the first network; obtaining the electronic data stored in the image processing apparatus, based on the data obtaining request obtained from the memory; and sending the electronic data to the server apparatus, the electronic data being transmitted to the operation device.

In one example, the client apparatus may obtain the electronic data stored in the image processing apparatus by transmitting the data obtaining request obtained from the memory disposed on the first network, to the image processing apparatus, or by causing the other apparatus to obtain the electronic data stored in the image processing apparatus based on the data obtaining request.

For example, the client apparatus includes: a data request obtainer configured to transmit a request for obtaining a data obtaining request to the counterpart information processing apparatus, and to obtain the data obtaining request stored in a queue of the counterpart information processing apparatus, wherein the data obtaining request is transmitted from a portable device connected to the first network to request for obtaining electronic data stored in an image processing apparatus disposed on the second network; a data obtainer configured to transmit the data obtaining request received from the counterpart information processing apparatus to the image processing apparatus and to obtain the electronic data stored in the image processing apparatus; and a data transmit request device configured to generate a data transmit request for requesting transmit of the electronic data and to send the data transmit request to the counterpart information processing apparatus.

### BRIEF DESCRIPTION OF THE DRAWINGS

A more complete appreciation of the disclosure and many of the attendant advantages and features thereof can be readily obtained and understood from the following detailed description with reference to the accompanying drawings, wherein:

FIG. 1 is an illustration of a network configuration of a data relay system according to an example embodiment of the present invention;

FIG. 2 is a schematic block diagram illustrating a functional structure of a selected portion of the data relay system of FIG. 1;

FIG. 3 is a data sequence diagram illustrating operation of transmitting data obtained from a message box of an image processing apparatus of the data relay system of FIG. 1 to a portable device, performed by the data relay system of FIG. 1, according to an example embodiment of the present invention;

FIG. 4 is an example data structure of a data obtaining request transmitted from the portable device to a message queue server of the data relay system of FIG. 1, when the request is generated as a GET request;

FIG. 5A is an example data structure of a request for obtaining the data obtaining request, transmitted from a message relay worker to the message queue server of the data relay system of FIG. 1, when the request is generated as a GET request;

FIG. 5B is another example data structure of a request for obtaining the data obtaining request, transmitted from the message relay worker to the message queue server of the data relay system of FIG. 1, when the request is generated as a GET request;

FIG. 6 is an example data structure of a response containing electronic data, transmitted from the image processing apparatus to the message relay worker of the data relay system of FIG. 1 in response to a data obtaining request, according to an example embodiment of the present invention;

FIG. 7A is an example data structure of a data transmit request, transmitted from the message relay worker to the message queue server of the data relay system of FIG. 1, when the request is generated as a POST request;

FIG. 7B is another example data structure of a data transmit request, transmitted from the message relay worker to the message queue server of the data relay system of FIG. 1, when the request is generated as a POST request;

FIG. 8 is an example data structure of a response containing electronic data, transmitted from the message queue server to the portable device of the data relay system of FIG. 1;

FIG. 9 is a flowchart illustrating operation of controlling processing based on a type of request received from the outside apparatus, performed by the message queue server of the data relay system of FIG. 1, according to an example embodiment of the present invention;

FIG. 10 is an example data structure of a response containing a data obtaining request, transmitted from the message queue server to the message relay worker of the data relay system of FIG. 1, in response to a request for obtaining the data obtaining request;

FIG. 11 is a flowchart illustrating operation of obtaining a data obtaining request transmitted from the portable device, performed by the message relay worker of the data relay system of FIG. 1, according to an example embodiment of the present invention;

FIG. 12A is an example data structure of a response containing a data obtaining request, transmitted from the message queue server to the message relay worker of the data relay system of FIG. 1, in response to a request for obtaining the data obtaining request;

FIG. 12B is an example data structure of a request for obtaining electronic data, generated based on the response of FIG. 12A and transmitted from the message relay worker to the image processing apparatus of the data relay system of FIG. 1;

FIG. 13 is a schematic block diagram illustrating a hardware structure of any one of the message queue server and the message relay worker of the data relay system of FIG. 1 and the portable device of FIG. 1, according to an example embodiment of the present invention; and

FIG. 14 is a schematic block diagram illustrating a hardware structure of the image processing apparatus of the data relay system of FIG. 1, according to an example embodiment of the present invention.

The accompanying drawings are intended to depict example embodiments of the present invention and should not be interpreted to limit the scope thereof. The accompanying drawings are not to be considered as drawn to scale unless explicitly noted.

### DETAILED DESCRIPTION OF EXAMPLE EMBODIMENTS

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

In describing example embodiments shown in the drawings, specific terminology is employed for the sake of clarity. However, the present disclosure is not intended to be limited to the specific terminology so selected and it is to be understood that each specific element includes all technical equivalents that operate in a similar manner.

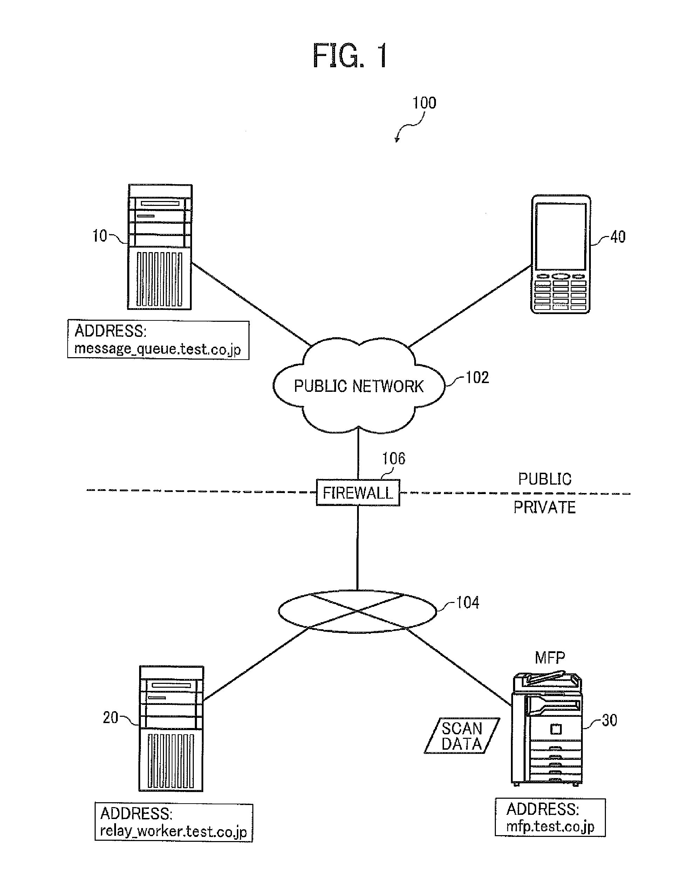

FIG. 1 illustrates a network configuration of a data relay system 100 according to an example embodiment of the present invention. The data relay system 100 of FIG. 1 includes a message queue server 10, a message relay worker 20, and an image processing apparatus 30, which are connected through a network.

As illustrated in FIG. 1, the data relay system 100 resides on a public network 102 and a local network 104. The public network 102 is any network without firewall protection that can be directly connected to the Internet. The local network 104, or the private network 104, is any network with firewall protection. The local network 104 may be implemented by the Intranet, such as a local area network (LAN) that is provided within a private site such as within a specific company's network. In the following examples, the public network 102 may be alternatively referred to as the outside network, with respect to the local network 104. The local network 104 may be alternatively referred to as the inside network or the private network, with respect to the public network 102.

The message queue server 10, which is provided on the public network 102, functions as a server such as a web server in the data relay system 100. The message relay worker 20, which is provided on the local network 104, functions as a client with respect to the message queue server 10. The message queue server 10 and the message relay worker 20 may each be implemented by an information processing apparatus, such as a computer system having any desired number of processing circuits that operate in cooperation with one or more memory circuits.

The image processing apparatus 30 may be implemented by a multifunctional peripheral (MFP) such that the image processing apparatus 30 may be referred to as the MFP 30 in this example. The MFP 30 is capable of performing one or more image processing functions including the functions of copying, transmitting or receiving facsimile data, scanning an original document into scan data, and printing image data to output a printed image. The MFP 30 is further provided with the document box function of storing electronic data in a memory and providing the electronic data to the outside apparatus according to a request from the outside apparatus. In one example, the MFP 30 may scan a paper document into scan data using the scanning function, and store the scan data in a memory using the document box function. In another example, the MFP 30 may receive electronic data from the outside apparatus such as a personal computer using the communication function, and store the received electronic data in the memory using the document box function. When a user instruction for obtaining specific electronic data is received from the outside apparatus, the MFP 30 sends the specific electronic data stored in the memory to the outside apparatus.

The MFP 30, which is provided on the local network 104, further communicates with the message relay worker 20 through the local network 104. In this example illustrated in FIG. 1, the message relay worker 20 and the MFP 30 are provided within the local network 104, such as the Intranet managed by a specific company or organization.

Still referring to FIG. 1, the data relay system 100 of FIG. 1 further includes a firewall 106 between the public network 102 and the local network 104 such that confidentiality of electronic data is maintained as long as electronic data stays inside the local network 104. The firewall 106 allows access from the local network 104 to the public network 102, but blocks access from the public network 102 to the local network 104. Assuming that a portable device 40 connected to the public network 102 sends a HyperText Transfer Protocol (HTTP) request directly to a device within the private site to access the local network 104, the firewall 106 blocks the HTTP request such that the portable device 40 is not able to directly access the device within the private site, such as the MFP 30. In this example, the portable device 40, which is one example of operation device, may be a notebook personal computer (PC), a tablet computer, a portable phone such as a smart phone, a digital camera, or any other type of personal digital assistance (PDA). Further, the portable device 40 is provided with a web browser capable of generating a HTTP request.

In the data relay system 100 of FIG. 1, the message queue server 10 and the message relay worker 20 operate in cooperation to allow the portable device 40 connected to the public network 102 to obtain electronic data stored in the memory of the MFP 30 according to a user instruction input through the portable device 40.

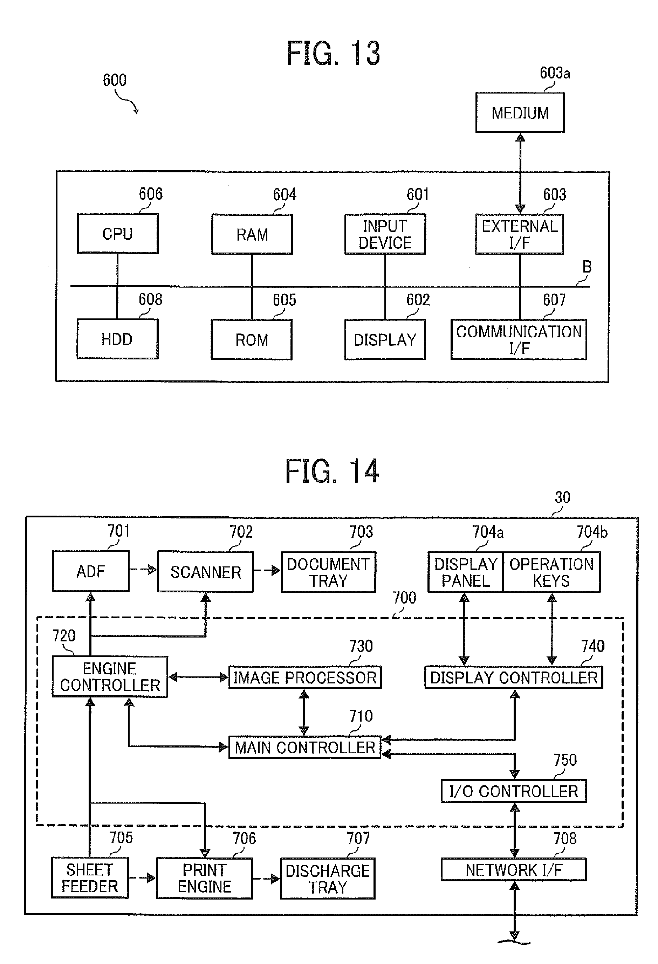

In this example, any one of the message queue server 10 and the message relay worker 20 may be implemented by a computer system 600 having a hardware structure illustrated in FIG. 13.

Referring to FIG. 13, the computer system 600 includes an input device 601, a display 602, an external interface (I/F) 603, a random access memory (RAM) 604, a read only memory (ROM) 605, a central processing unit (CPU) 606, a communication interface (I/F) 607, and a hard disk drive (HDD) 608, which are connected through a bus B.

The input device 601 may be implemented by any device functioning as a user interface that interacts with a user such as a keyboard, a mouse, or a touch-panel screen. The input device 601 receives a user instruction, and sends an operation signal based on the user instruction to the CPU 606.

The display 602 may be implemented by a liquid crystal display (LCD), and displays various information to the user such as a processing result of the computer system 600.

The communication I/F 607, which may be implemented by a network interface circuit, connects the computer system 600 with the outside apparatus through the network such as the local network 104 or the public network 102.

The HDD 608 is a nonvolatile memory, which may store various control programs or data for use by the CPU 606. For example, the HDD 608 may store the operating system (OS) that controls entire operation of the computer system 600, and various application programs that may run on the OS. The HDD 608 may manage various programs or data using a predetermined file system or a database.

The external I/F 603, which may be implemented by an interface circuit, communicates with the outside device such as a recording medium 603a. The recording medium 603a, which may be freely attached to or detached from the computer system 600 through the external I/F 603, may previously store various data such as application programs. Through the external I/F 603, the CPU 606 of the computer system 600 reads or writes data with respect to the recording medium 603a. Examples of the recording medium 603a include, but not limited to, flexible disk, CD, digital versatile disk (DVD), SD memory card, and Universal Serial Bus (USB) memory.

The ROM 605 is a nonvolatile memory, which stores various programs or data in a manner such that it is not deleted even when the power of the computer system 600 is turned off. The ROM 605 stores the Basic Input/Output System (BIOS) to be executed at the time of starting up the system, and various settings data such as the OS settings data or the network settings data. The RAM 604 is a volatile memory, which temporarily stores various programs or data.

The CPU 606 reads the programs or data from the nonvolatile memory such as the ROM 605 or the HDD 608 onto the volatile memory such as the RAM 604 to perform operation according to the read programs or data.

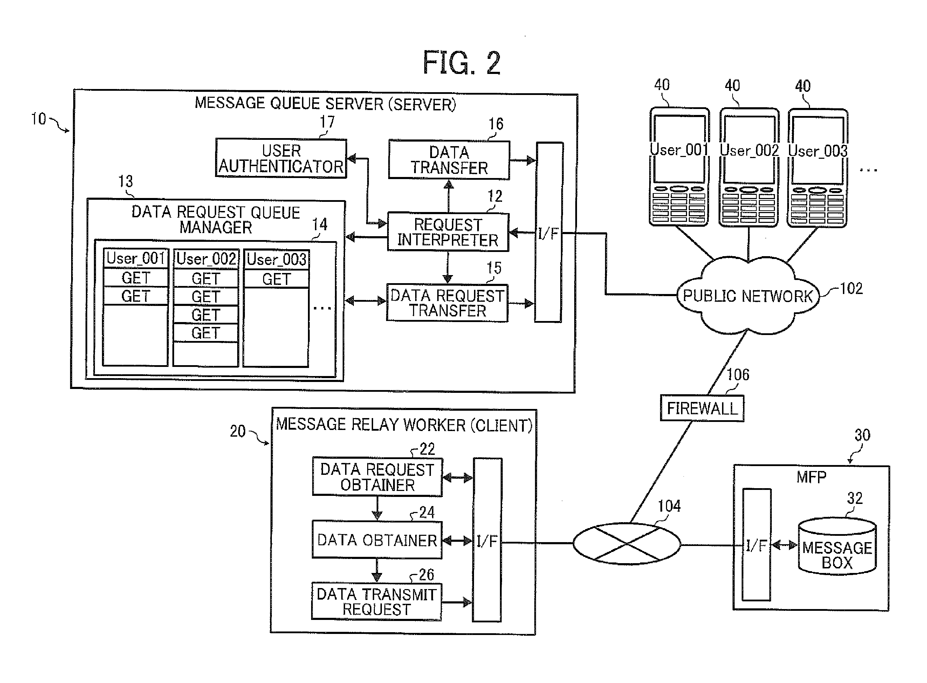

In one example, the CPU 606 of the computer system 600 loads a message queue server control program from the nonvolatile memory onto the volatile memory to cause the computer system 600 to function as the message queue server 10 of FIG. 2. In another example, the CPU 606 of the computer system 600 loads a message relay worker control program from the nonvolatile memory onto the volatile memory to cause the computer system 600 to function as the message relay worker 20 of FIG. 2.

The portable device 40 may have a hardware structure that is substantially similar to the hardware structure of the computer system 600 of FIG. 13. The portable device 40 is installed with a user interface program, which causes the portable device 40 to communicate with the message queue server 10 through the public network 102 to send a request for obtaining electronic data stored in the MFP 30. For example, the user interface program may be implemented by a web browser program.

Referring now to FIG. 14, a hardware structure of the MFP 30 is explained according to an example embodiment of the present invention. The MFP 30 includes a controller 700, an automatic document feeder (ADF) 701, a scanner 702, a document tray 703, a display panel 704a, operation keys 704b, a sheet feeder 705, a print engine 706, a discharge tray 707, and a network interface (I/F) 708. The controller 700 includes a main controller 710, an engine controller 720, an image processor 730, a display controller 740, and an input/output (I/O) controller 750.

The display panel 704a, which functions as a user interface that interacts with a user, displays various information regarding the MFP 30 to the user. The display panel 704a further receives a user instruction from the user through a screen displayed on the display panel 704a. The operation keys 704b include the "start" key that instructs execution of a specific function when selected, the ten key to allow the user to input numerical data, and a light emitting diode (LED) to be lighted to indicate selection of a specific operation key 704b by the user. The display panel 704a and the operation keys 704b may together function as an operation device of the MFP 30.

The network I/F 708, which may be implemented by a network interface circuit, connects the MFP 30 with the outside apparatus through the network such as the local network 104. The network I/F 708 may be in compliance with the Ethernet or USB standards and is capable of communicating data based on TCP/IP protocol. When the MFP 30 is provided with the facsimile communication function, the network I/F 708 is connected to a telephone communication line.

The controller 700, which is implemented by a combination of hardware devices and software devices of the MFP 30, controls entire operation of the MFP 30. More specifically, the MFP 30 is provided with a central processing unit (CPU), and a memory such as a nonvolatile memory and a volatile memory. The CPU reads various programs or data from the nonvolatile memory onto the volatile memory to realize various functional modules as illustrated in FIG. 14 according to the programs or data. Through the selected functional modules, the controller 700 controls hardware devices of the MFP 30 such as the hardware circuits to perform various processing.

The main controller 710 controls various functional modules of the controller 700, for example, by sending an instruction to a specific functional module. The engine controller 720 controls driving of devices related to image forming such as the print engine 706, the sheet feeder 705, the scanner 702, or the ADF 701, under control of the main controller 710.

The image processor 730 applies various image processing to image data. In one example, the image processor 730 generates drawing data based on print data, which is to be used by the print engine 706 to print an image. In another example, the image processor 730 generates scan data based on information output by the scanner 702 based on the original document.

The display controller 740 causes the display panel 704a to display various information, or controls lighting of the LED of the operation keys 704b. The display controller 740 further receives a user instruction input through the operation device such as the display panel 704a, and sends a signal based on the user instruction to the main controller 710.

The I/O controller 750 inputs data, which is received through the network I/F 708, to the main controller 710. The main controller 710 controls the I/O controller 750 to access the outside apparatus through the network I/F 708.

In one example, when the MFP 30 receives a user instruction for printing, the I/O controller 750 receives a print job through the network I/F 708 from the outside apparatus, and transfers the received print job to the main controller 710. The main controller 710 causes the image processor 730 to generate drawing data based on image data included in the print job. The engine controller 720 causes the print engine 706 to form an image based on the drawing data on a recording sheet fed by the sheet feeder 705. The print engine 706 may form an image using any desired printing method such as the inkjet printing method or electrophotographic printing method. The printed sheet is output onto the discharge tray 707.

In one example, when the MFP 30 receives a user instruction for scanning, the display controller 740 or the I/O controller 750 transfers the user instruction for scanning to the main controller 710. The main controller 710 controls the engine controller 720 to perform scanning. More specifically, the engine controller 720 drives the ADF 701 to convey an original sheet that is set at the ADF 701 to the scanner 702. The engine controller 720 drives the scanner 702 to scan the original sheet transferred by the ADF 701 into image information. Alternatively, when the ADF 701 is not set with the original sheet, the scanner 702 may scan the original sheet set at an image reading section of the scanner 702 into the image information. The engine controller 720 transfers the image information obtained from the scanner 702 to the image processor 130. The image processor 130 generates scan data based on the image information. The main controller 710 obtains the scan data, and stores the scan data in a memory of the MFP 30.

In one example, when the MFP 30 receives a user instruction for copying, the main controller 710 causes the engine controller 720 to perform scanning as described above to obtain the image information of the original document. The main controller 710 further causes the image processor 730 to generate drawing data based on the image information obtained from the scanner 702 or the scan data generated by the image processor 730. The engine controller 720 causes the print engine 706 to form an image based on the drawing data on a recording sheet fed by the sheet feeder 705. The printed sheet is output onto the discharge tray 707.

Further, in this example, the MFP 30 is provided with document box application, which stores electronic data in a memory such as a hard disk drive of the MFP 30, and sends specific electronic data to the outside apparatus in response to a request for obtaining the specific electronic data. Any portion of the memory, which stores the electronic data using the document box application, is referred to as a message box 32.

FIG. 2 illustrates a functional structure of the message queue server 10, the message relay worker 20, and the MFP 30.

The MFP 30 of FIG. 2 includes the message box 32 and an interface. The message box 32, which may be implemented by any desired memory of the MFP 30, stores electronic data such as scan data obtained by scanning. The interface may be implemented by the network I/F 708 (FIG. 14). While only the message box 32 and the interface are shown in FIG. 2, the MFP 30 additionally includes other functional units.

The message queue server 10 functions as the web server, which communicates with a client such as the portable device 40 or the message relay worker 20 based on HTTP. The message queue server 10 includes a request interpreter 12, a data request queue manager 13 provided with a queue 14, a data request transfer device or unit ("data request transfer") 15, a data transfer device or unit ("data transfer") 16, and a user authenticator 17. These units shown in FIG. 2 correspond to a plurality of functions or functional modules, which are executed according to an instruction of the CPU 606 (FIG. 13) that is generated according to the message queue server control program being loaded from the ROM 605 onto the RAM 604. The message queue server 10 further includes an interface, which may be implemented by the communication I/F 607 and/or the external I/F 603.

The request interpreter 12 interprets a request, such as a HTTP request, received from the client to determine a type of the request. The request interpreter 12 instructs the other functional modules of the message queue server 10 to perform specific operation based on the type of the request. For example, the request interpreter 12 may determine whether the request received from the client is a request for obtaining electronic data ("data obtaining request") from the MFP 30 that is received from the portable device 40. In such case, the request interpreter 12 instructs the data request queue manager 13 to store the data obtaining request in the queue 14. The request interpreter 12 may be implemented by the CPU 606.

The data request queue manager 13 may be implemented by the CPU 606, which operates in cooperation with the queue 14 that may be implemented by any desired memory of the computer system 600. For example, the queue 14 may be a volatile buffer area in a memory or a data set on a storage device. The data request queue manager 13 stores the data obtaining request received from the portable device 40 in the queue 14 according to an instruction received from the request interpreter 12. More specifically, the queue 14 is provided for each one of a plurality of users who are previously registered to the data relay system 100. The data request queue manager 13 specifies the user of the portable device 40 that sends the data obtaining request using user authentication information included in the data obtaining request, and stores the data obtaining request in the queue 14 that is associated with the specified user. For example, a specific area of the queue 14 may be associated with user identification information of the user. In this example, the data obtaining request may be generated in the form of GET request.

The data request transfer 15 transfers the data obtaining request stored in the queue 14 such as the GET request, to the message relay worker 20, according to an instruction received from the request interpreter 12. The data request transfer 15 may be implemented by the CPU 606.

In another example, the request interpreter 12 may receive a request for transmitting the electronic data ("data transmit request") obtained by the message relay worker 20 to the portable device 40, from the message relay worker 20. In such case, under control of the request interpreter 12, the data transfer 16 sends the electronic data that is received from the message relay worker 20 to the portable device 40 through the interface. The data transfer 16 may be implemented by the CPU 606.

The user authenticator 17 authenticates a user at the portable device 40, based on authentication information included in the data obtaining request that is received from the portable device 40. The user authenticator 17 may be implemented by the CPU 606.

Still referring to FIG. 2, the message relay worker 20 includes a data request obtainer 22, a data obtainer 24, and a data transmit request device ("data transmit request") 26. These units shown in FIG. 2 correspond to a plurality of functions or functional modules, which are executed according to an instruction of the CPU 606 (FIG. 13) that is generated according to the message relay worker control program being loaded from the ROM 605 onto the RAM 604. The message relay worker 20 further includes an interface, which may be implemented by the communication I/F 607 and/or the external I/F 603.

The data request obtainer 22 periodically transmits a request for obtaining the data obtaining request to the message queue server 10 through the public network 102 via the firewall 106. For example, the data obtaining request may be generated in the form of GET request. The data request obtainer 22 receives the data obtaining request, which is sent from the portable device 40 to the message queue server 10 and stored in the queue 14, from the message queue server 10 in response to the request for obtaining the data obtaining request. The data request obtainer 22 may be implemented by the CPU 606.

The data obtainer 24 sends the data obtaining request sent from the portable device 40, which is received through the message queue server 10, to the MFP 30 through the local network 104. In response to the data obtaining request, the data obtainer 24 receives specific electronic data stored in the message box 32 of the MFP 30 from the MFP 30, as requested by the data obtaining request. The data obtainer 24 may be implemented by the CPU 606.

The data transmit request 26 generates a data transmit request, which requests the message queue server 10 to transmit the electronic data received from the MFP 30. The data transmit request may be generated in the form of POST request. The data transmit request 26 further sends the data transmit request to the message queue server 10 through the public network 102 via the firewall 106. The data transmit request 26 may be implemented by the CPU 606.

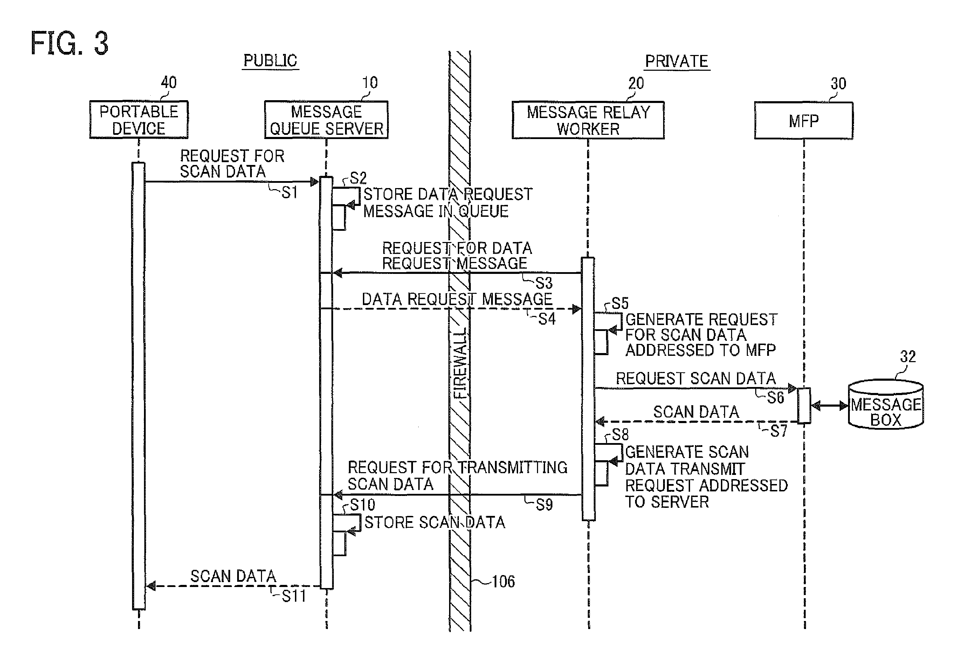

Referring now to FIG. 3, operation of relaying a request received from the portable device 40 to the MFP 30, performed by the data relay system of FIG. 1, is explained according to an example embodiment of the present invention. In this example, it is assumed that the user at the portable device 40 downloads electronic data "test.jpg" that is stored in the message box 32 of the MFP 30, through the message queue server 10 and the message relay worker 20. Further, it is assumed that the electronic data "test.jpg" is scan data scanned from an original document using the MFP 30.

In operation, the user executes the web browser program, which is installed onto the portable device 40, to access the URL address "message_queue.test.co.jp", which is assigned to the message queue server 10. It is assumed that the portable device 40 is previously provided with information regarding the URL address "message_queue.text.co.jp" of the message queue server 10. When accessed by the portable device 40, the message queue server 10 sends specific screen data to the portable device 40 to allow the user to download electronic data from the message box 32 of the MFP 30. For example, the portable device 40 may display a list of file names each specifying an electronic data file that is available for access by the user, onto the display of the portable device 40 using the web browser. Assuming that the user selects an execution key while selecting a specific file name "text.jpg" of the data file being displayed on the screen, at S1, the web browser of the portable device 40 generates a request for obtaining the scan data "test.jpg", for example, in the form of GET request. The web browser of the portable device 40 further sends the request for obtaining the electronic data, such as the scan data, ("the data obtaining request") to the message queue server 10 through the public network 102. In this example, the web browser corresponds to the CPU 606, which operates according to the web browser program. Further, the CPU 606 functioning as the web browser causes the communication I/F 607 to send the data obtaining request to the message queue server 10.

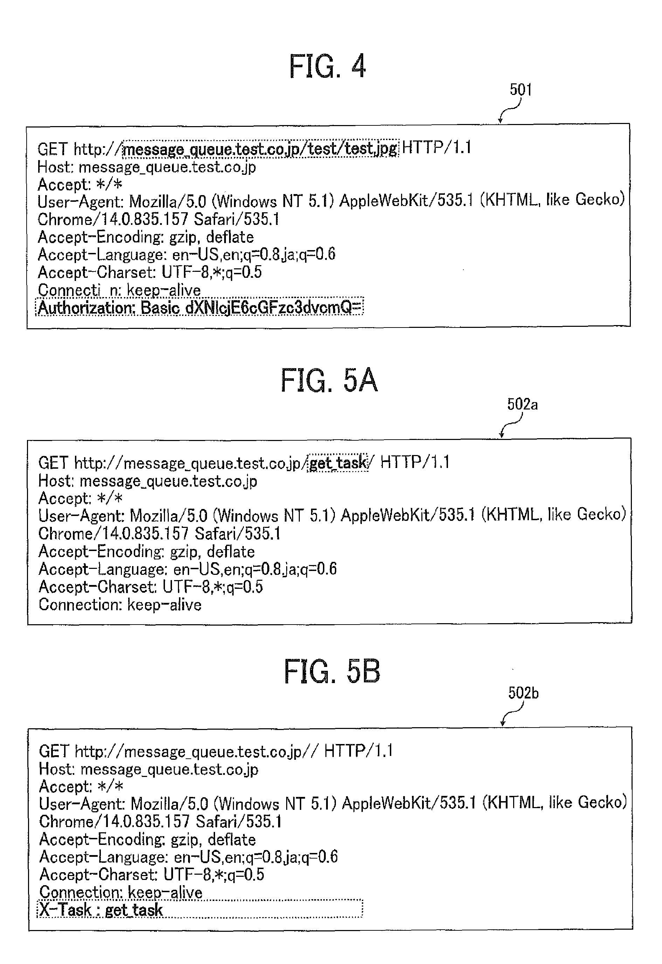

FIG. 4 illustrates an example data format of the data obtaining request, which is transmitted from the web browser of the portable device 40 to the message queue server 10, when the request is generated as a GET request 501. Referring to FIG. 4, a header section of the GET request 501 has a request name field in which the path name of the selected data file "message_queue.test.co.jp/test/test.jp" is declared. The header section of the GET request 501 further includes an authorization field in which the user name and the password of the user at the portable device 40, which may be collectively referred to as the user authentication information, are described. In this example, the user name and the password of the user are encoded with Base64.

When the data obtaining request is received from the portable device 40, the user authenticator 17 of the message queue server 10 authenticates the user using the user authentication information included in the data obtaining request. When the user is authenticated, the operation proceeds to S2. When the user is not authenticated, the operation ends in error. At S2, the data request queue manager 13 of the message queue server 10 stores a message of the data obtaining request in a specific area of the queue 14 designated to the authenticated user. For example, the message of the data obtaining request is stored in association with user identification information such as a user ID of the authenticated user.

At S3, the message relay worker 20, which is provided within the private site, periodically sends a request for obtaining a message of the data obtaining request to the message queue server 10 on the public network 102 such as on the Internet. The request for obtaining the data obtaining request may be generated in the form of GET request.

More specifically, the data request obtainer 22 of the message relay worker 20 describes a predetermined message indicating that the request is the request for obtaining the data obtaining request, in the header section of the GET request to be transmitted to the message queue server 10. For example, as illustrated in FIG. 5A, the GET request 502a includes a request name field at the header section, in which the "get_task" is declared. The "get_task" is the message indicating that the request is the request for obtaining the data obtaining request. The request for obtaining the data obtaining request is transmitted to the message queue server 10 through the public network 102 via the firewall 106.

In alternative to including the predetermined message "get_task" in the request name field of the header section, such message "get_task" may be included in an extension field of the header section of the request. As illustrated in FIG. 5B, the GET request 502b includes an extension field "X-Task" in which the "get_task" is declared.

In response to the request for obtaining the data obtaining request that is transmitted from the message relay worker 20, at S4, the data request queue manager 13 of the message queue server 10 determines whether a message of the data obtaining request is stored in the queue 14. When it is stored, the data request queue manager 13 obtains a message of the data obtaining request from the queue 14, and causes the data request transfer 15 to transmit the obtained data obtaining request to the message relay worker 20, for example, as a HTTP response.

At S5, the message relay worker 20 receives the data obtaining request from the message queue server 10, for example, in the form of HTTP response. The data obtainer 24 of the message relay worker 20 generates a data obtaining request, which requests the MFP 30 to obtain the electronic data specified by the data obtaining request. At S6, the data obtainer 24 of the message relay worker 20 transmits the data obtaining request to the MFP 30 through the local network 104. In this example, it is assumed that the data obtaining request requests the MFP 30 to obtain the electronic data "test.jpg", which is scan data, from the message box 32.

When the data obtaining request is received from the message relay worker 20, the MFP 30 obtains the electronic data "test.jpg" from the message box 32, and generates a HTTP response including the obtained electronic data to be transmitted to the message relay worker 20.

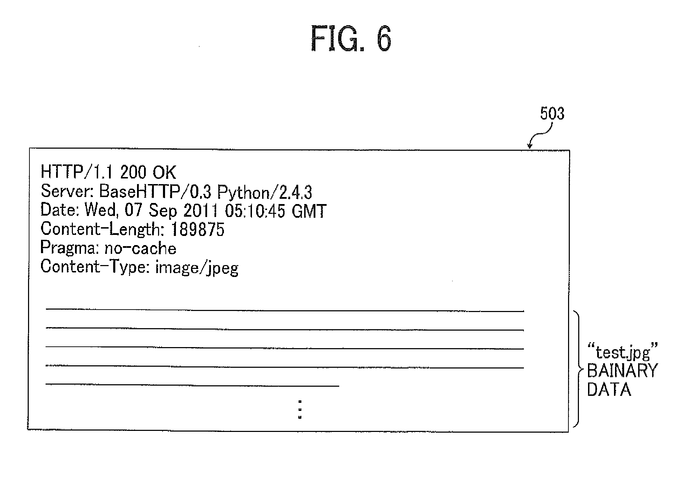

FIG. 6 illustrates an example HTTP response 503, which is generated by the MFP 30. Referring to FIG. 6, the HTTP response 503 includes a message body, in which the binary data of the electronic data "test.jpg" is stored. At S7, the MFP 30 transmits the HTTP response such as the HTTP response 503 to the message relay worker 20 through the local network 104. Operation of generating and sending the HTTP response is performed by the controller 700 using the document box application.

When the HTTP response such as the HTTP response 503 is received at the message relay worker 20, at S8, the message relay worker 20 generates a request for transmitting the electronic data that is received ("data transmit request"), based on the received HTTP response. For example, assuming that the HTTP response 503 is received, the data transmit request 26 of the message relay worker 20 generates a POST request including a message body in which the contents of the HTTP response 503 is stored. Further, the data transmit request 26 describes a predetermined message in the header section of the POST request to indicate that the request is the data transmit request for requesting transmit of the electronic data.

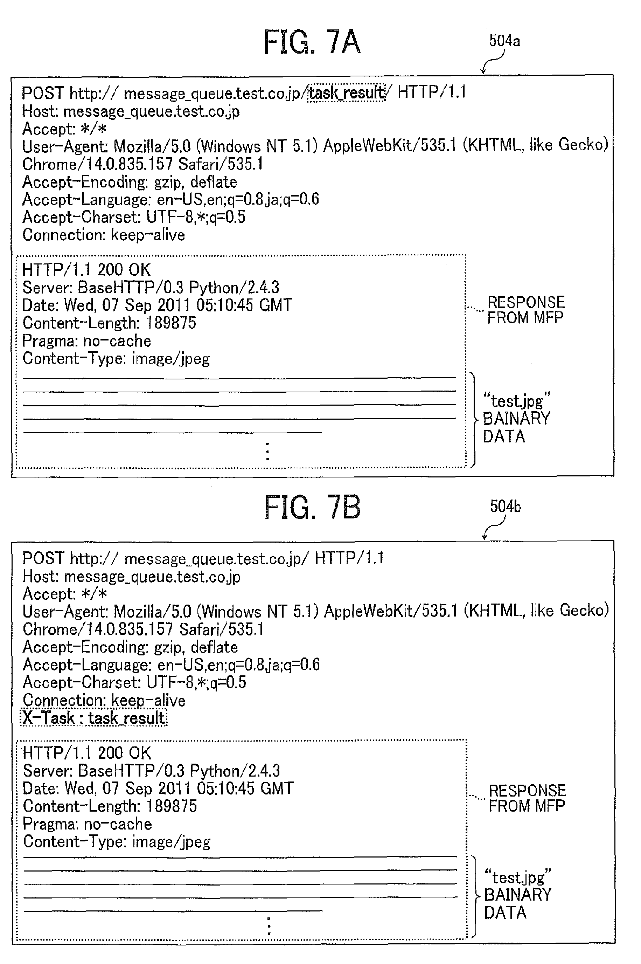

In one example, as illustrated in FIG. 7A, the message relay worker 20 may generate a POST request 504a, in which the "task_result" is declared at the end of path information in the request name field of the header section of the request. The "task_result" indicates that the request is the data transmit request, which requests transmit of the electronic data. The POST request 504a further includes binary data of the "test.jpg" file, which is received in the form of a response from the MFP 30, in the body of the request.

In another example, as illustrated in FIG. 7B, the message relay worker 20 may generate a POST request 504b, in which the "task_result" is declared in the extension field "X-Task" of the header section of the request. The POST request 504b further includes binary data of the "test.jpg" file, which is received in the form of a response from the MFP 30, in the body of the request.

At S9, the message relay worker 20 transmits the data transmit request, such as the POST request, to the message queue server 10 through the public network 102 via the firewall 106.

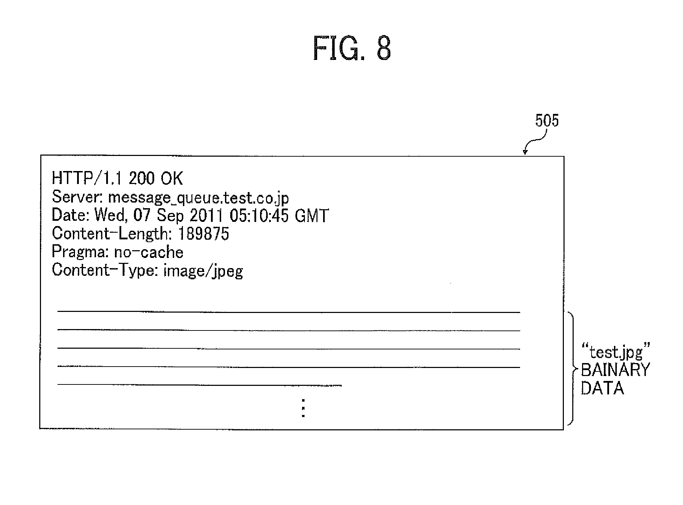

At S10, the message queue server 10 determines that the request received from the message relay worker 20 is the data transmit request. The message queue server 10 specifies the portable device 40, which sends the data obtaining request for obtaining the electronic data "test.jpg", based on information obtained from the data transmit request. At S10, the message queue server 10 generates a response, such as a HTTP response, to be transmitted to the portable device 40 in response to the data obtaining request received from the portable device 40. More specifically, the data transfer 16 of the message queue server 10 stores the electronic data extracted from the data transmit request in a body of the HTTP response. For example, as illustrated in FIG. 8, the data transfer 16 of the message queue server 10 generates a HTTP response 505 to be transmitted to the portable device 40. The HTTP response 505 includes a message body in which binary data of the "test.jpg" file is stored. At S11, the data transfer 16 of the message queue server 10 transmits the response including the electronic data, such as the HTTP response 505, to the portable device 40.

As described above, the message queue server 10 and the message relay worker 20 cooperate with each other to perform operation of FIG. 3 to allow the portable device 40 connected to the public network 102 to download electronic data from the message box 32 of the MFP 30 that resides on the local network 104, via the firewall 106.

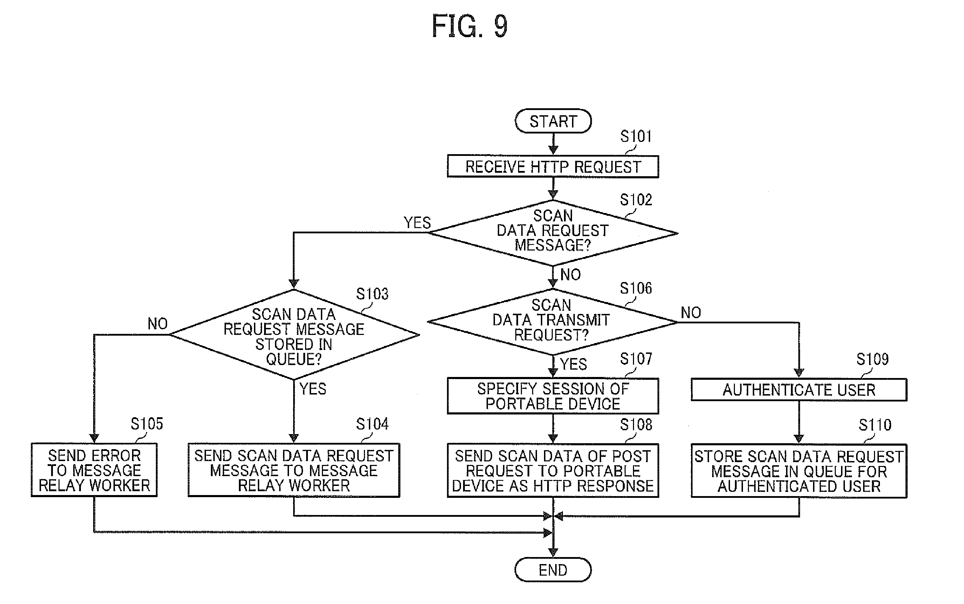

As described above referring to FIG. 3, the message queue server 10 receives a data obtaining request from the portable device 40, which requests for specific electronic data stored in the message box 32. The message queue server 10 further receives a request for obtaining a message of the data obtaining request from the message relay worker 20. The message queue server 10 further receives a data transmit request for requesting transmit of the electronic data, from the message relay worker 20. These three types of request may be received in the form of HTTP request. The request interpreter 12 of the message queue server 10 determines a type of the HTTP request received from the outside, and performs processing based on the determined type of request, as described below referring to FIG. 9.

Referring now to FIG. 9, operation of performing specific operation according to a type of request received from the outside apparatus, performed by the message queue server 10, is explained according to an example embodiment of the present invention.

At S101, the message queue server 10 receives the HTTP request through the interface, such as the communication I/F 607. At S102, the request interpreter 12 of the message queue server 10 determines whether the received request is a request for obtaining a message of the data obtaining request, which requests the message queue server 10 to obtain the data obtaining request. More specifically, the request interpreter 12 refers to the header section of the HTTP request to determine whether the message indicating that the request is the request for obtaining the data obtaining request is declared at a specific area.

For example, when the request for obtaining the data obtaining request, which is received from the message relay worker 20, is generated as the GET request 502a (FIG. 5A), the request interpreter 12 refers to path information of the HTTP request. More specifically, the request interpreter 12 analyzes the end of path information included in the request name field of the header section of the GET request 502a. When the "get_task" is declared at the end of the path information, the request interpreter 12 determines that the request received at S101 is the GET request 502a, which requests for obtaining a message of the data obtaining request.

In another example, when the request for obtaining the data obtaining request, which is received from the message relay worker 20, is generated as the GET request 502b (FIG. 5B), the request interpreter 12 refers to a key and a value of the header section of the HTTP request. More specifically, the request interpreter 12 analyzes the extension field "X-Task" of the header section of the received HTTP request to determine whether the "get_task" is declared. When the "get_task" is declared in the extension field "X-Task", the request interpreter 12 determines that the request received at S101 is the GET request 502b, which requests for obtaining a message of the data obtaining request.

When the request interpreter 12 determines that the request received at S101 is the request for obtaining the data obtaining request ("YES" at S102), the operation proceeds to S103. At S103, according to an instruction received from the request interpreter 12, the data request queue manager 13 determines whether any message of the data obtaining request is stored in the queue 14. When it is determined that the data obtaining request is stored ("YES" at S103), the operation proceeds to S104. At S104, the data request queue manager 13 obtains the message of data obtaining request from the queue 14, and sends the obtained message of data obtaining request to the data request transfer 15. The data request transfer 15 sends the obtained message of data obtaining request to the message relay worker 20 as a HTTP response in response to the HTTP request received at S101, and the operation ends.

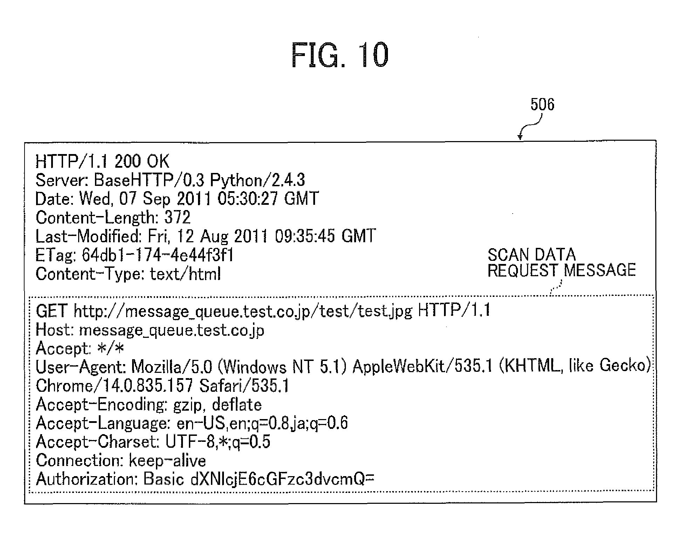

FIG. 10 illustrates an example data format of a HTTP response 506, which is transmitted from the message queue server 10 to the message relay worker 20 at S104. Referring to FIG. 10, the HTTP response 506 includes a message body in which the message of the data obtaining request received from the portable device 40, such as the GET request 501 of FIG. 1, is stored.

When it is determined that the message of data obtaining request is not stored in the queue 14 at S103 ("NO" at S103), the operation proceeds to S105. At S105, the data request queue manager 13 of the message queue server 10 returns an error message in response to the GET request received from the message relay worker 20 at S101, and the operation ends.

Referring back to S102, when the request interpreter 12 determines that the received HTTP request is not the request for obtaining a message of the data obtaining request ("NO" at S102), the operation proceeds to S106. At S106, the request interpreter 12 determines whether the received HTTP request is a data transmit request for requesting transmit of the electronic data. For example, the request interpreter 12 may refer to the header section of the received HTTP request to determine whether the message indicating that the request is the data transmit request is declared at a specific location.

For example, assuming that the data transmit request received from the message relay worker 20 is the POST request 504a of FIG. 7A, the request interpreter 12 refers to path information of the received HTTP request. More specifically, the request interpreter 12 analyzes the end of path information of the request name field of the header section of the POST request 504a to determine whether the "task_result" is declared. When the "task_result" is declared, the request interpreter 12 determines that the POST request 504a is the data transmit request for requesting transmit of the electronic data.

In another example, assuming that the data transmit request received from the message relay worker 20 is the POST request 504b of FIG. 7B, the request interpreter 12 refers to a key and a value of the header section of the received HTTP request. More specifically, the request interpreter 12 analyzes the extension field "X-Task" of the header section of the received POST request 504b to determine whether the "task_result" is declared. When the "task_result" is declared, the request interpreter 12 determines that the POST request 504b is the data transmit request for requesting transmit of the electronic data.

When the request interpreter 12 determines that the received HTTP request is the data transmit request ("YES" at S106), the operation proceeds to S107. At S107, according to an instruction received from the request interpreter 12, the data transfer 16 specifies a session being carried out with the portable device 40 that corresponds to the request received at S101. The message queue server 10 manages information regarding a session being carried out with each one of one or more devices, for example, by assigning a session ID to each session. The identification information of the portable device 40, such as the user identification information of the user, may be stored in association with the session ID.

When the session with the portable device 40 is specified, the operation proceeds to S108. At S108, the data transfer 16 extracts binary data of the electronic data such as the "test.jpg" file, from the message body of the data transmit request received from the message relay worker 20. For example, as described above referring to FIG. 7A or 7B, the binary data of electronic data is stored in the message body of the HTTP response received from the MFP 30, which is included in the data transmit request generated as the POST request. The data transfer 16 extracts the binary data from the POST request, and stores the extracted binary data in a message body of the HTTP response to be transmitted to the portable device 40 through the specified session. For example, the data transfer 16 generates the HTTP response 505 as described above referring to FIG. 8, by storing the binary data extracted from the POST request 504a or 504b. At S108, the data transfer 16 transmits the HTTP response to the portable device 40 through the specified session in response to the HTTP request at S101, and the operation ends. The portable device 40, which receives the HTTP response, may notify the user that obtaining of the specified electronic data is successful.

Referring back to S106, when the request interpreter 12 determines that the received HTTP request is not the data transmit request ("NO" at S106), the operation proceeds to S109. When the received HTTP request is none of the request for obtaining a message of the data obtaining request and the data transmit request, the request interpreter 12 determines that the received HTTP request is a data obtaining request for obtaining electronic data, which is received from the portable device 40, for example, in the form of GET request. In such case, the operation proceeds to S109 to cause the user authenticator 17 to authenticate the user using the user authentication information obtained from the received HTTP request.

For example, in case the GET request 501 of FIG. 4 is received, the user authenticator 17 refers to the character string "dXNIcjE6cGFzc3dvcmQ=" described in the "Authorization" field to determine whether the user is a registered user. The message queue server 10 may store a user authentication table, which registers user authentication information for each one of a plurality of users of the data relay system 100. For example, when the user authenticator 17 determines that the user ID and the password obtained from the request matches the user ID and the password in the table, the user authenticator 17 determines that the user is a registered user who is authorized to access the MFP 30. When authentication of the user fails, the user authenticator 17 of the message queue server 10 returns an error to the portable device 40, which sends the request, and the operation ends. When authentication of the user is successful, the operation proceeds to S110.

At S110, the request interpreter 12 sends user identification information that specifies the authenticated user to the data request queue manager 13, and instructs the data request queue manager 13 to store the data obtaining request received from the portable device 40 in a specific area of the queue 14. The data request queue manager 13 determines the specific area of the queue 14 that is designated to the specified user. For example, the data request queue manager 13 may refer to a conversion table, which stores association information indicating the association between the user identification information and queue identification information. The queue identification information may identify a specific area of the queue 14, such as a table storing one or more messages of data obtaining request for a specific user. The data request queue manager 13 stores a message of the data obtaining request received from the portable device 40 in the specified area of queue 14, and the operation ends.

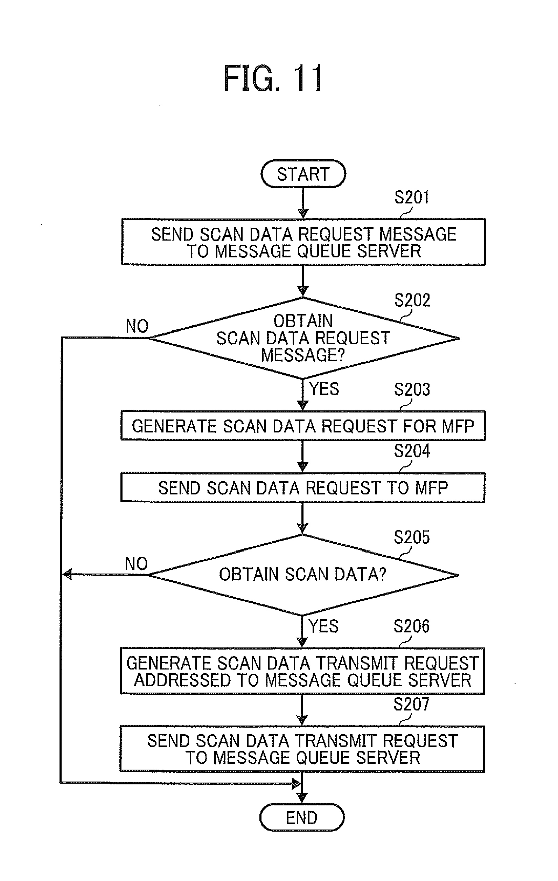

Referring now to FIG. 11, operation of relaying a data obtaining request received from the portable device 40 through the message queue server 10, performed by the message relay worker 20, is explained according to an example embodiment of the present invention.

At S201, the data request obtainer 22 sends a request for obtaining a message of the data obtaining request, such as the GET request, to the message queue server 10 through the public network 102 via the firewall 106. The request for obtaining the data obtaining request may be sent periodically or at any desired time according to a user instruction. The data request obtainer 22 waits for a response from the message queue server 10.

At S202, the data request obtainer 22 determines whether any message of the data obtaining request is received from the message queue server 10. When the data request obtainer 22 determines that the message of data obtaining request is not received ("NO" at S202), the operation ends. For example, when a response received from the message queue server 10 includes an error message, or a message indicating that no message of data obtaining request is included, the data request obtainer 22 determines that a message of the data obtaining request is not received.
In another example, when there is no response from the message queue server 10 for a predetermined time period, the data request obtainer 22 determines that there is no message of data obtaining request that is received. When the data request obtainer 22 determines that a message of the data obtaining request is received ("YES" at S202), the operation proceeds to S203.

At S203, the data obtainer 24 generates a request for obtaining the electronic data to be transmitted to the MFP 30, based on a message of the data obtaining request that is received from the message queue server 10. The request for obtaining the electronic data may be generated as the GET request.

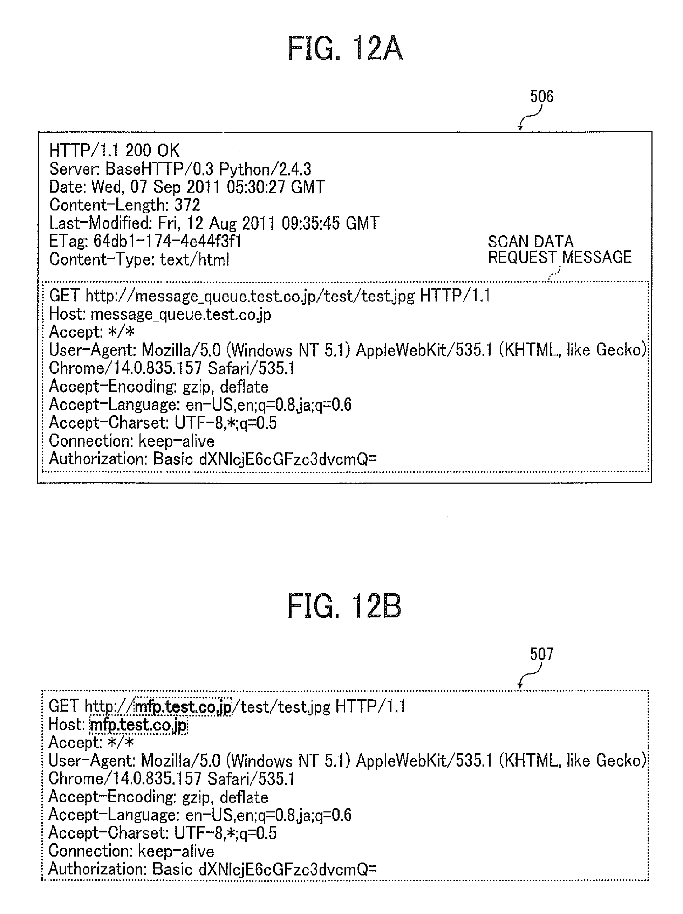

For example, it is assumed that the data obtainer 24 receives a HTTP response 506 of FIG. 12A from the message queue server 10. The data obtainer 24 extracts a message of data obtaining request from a message body of the HTTP response 506, and replaces the address "message_queue.test.co.jp" of the message queue server 10 described in the request name field with the address "mfp.test.co.jp" of the MFP 30. Accordingly, a GET request 507 of FIG. 12B is generated.

At S204, the data obtainer 24 sends the request for obtaining the electronic data, such as the GET request 507, to the MFP 30 through the local network 104.

At S205, the data obtainer 24 determines whether the electronic data is received from the MFP 30 in response to the request for obtaining the electronic data. For example, the data obtainer 24 interprets any response received from the MFP 30. When the response received from the MFP 30 is an error message indicating that the specified electronic data is not obtained ("NO" at S205), the operation ends in error. When the response received from the MFP 30 includes the specified electronic data ("YES" at S205), the operation proceeds to S206. For example, when the response received from the MFP 30 is the HTTP response 503 of FIG. 6 including the specified scan data "test.jpg", the data obtainer 24 determines that the electronic data is received, and the operation proceeds to S206.

At S206, the data transmit request 26 generates a data transmit request for requesting transmit of the electronic data, based on the response received from the MFP 30. For example, the data transmit request 26 may generate a POST request to be transmitted to the message queue server 10, based on the HTTP response 503 of FIG. 6, as described above referring to FIG. 7A or 7B. More specifically, the data transmit request 26 stores an extracted message of the HTTP response 503 received from the MFP 30 in a message body, and declares the "task_result" indicating that the request is the data transmit request in the extension field "X-Task" or in the request name field of the header section of the request.

At S207, the data transmit request 26 transmits the data transmit request for requesting transmit of the electronic data to the message queue server 10 through the public network 102 via the firewall 106, and the operation ends. The message relay worker 20 periodically performs the above-described operation of FIG. 11.

As described above, the user at the portable device 40 is able to download electronic data stored in the MFP 30 that resides on the local network 104, from the potable device 40 connected to the public network 102, while keeping confidentiality of the electronic data stored on the local network 102.

Numerous additional modifications and variations are possible in light of the above teachings. It is therefore to be understood that within the scope of the appended claims, the disclosure of the present invention may be practiced otherwise than as specifically described herein.

With some embodiments of the present invention having thus been described, it will be obvious that the same may be varied in many ways. Such variations are not to be regarded as a departure from the spirit and scope of the present invention, and all such modifications are intended to be included within the scope of the present invention.

For example, elements and/or features of different illustrative embodiments may be combined with each other and/or substituted for each other within the scope of this disclosure and appended claims.

For example, a number of the message relay worker 20 is not limited to one as described above referring to FIG. 1. The message relay worker 20 may be provided for each one of a plurality of users. For example, assuming that a first message relay worker 20 and a second message relay worker 20 are provided, the queue 14 may have a first queue for the first message relay worker 20 and a second queue for the second message relay worker 20. In such case, the user authenticator 17 uses the user authentication information to specify a relay worker, using association information that associates the user authentication information and the relay worker identification information.

Further, a number of image processing apparatuses 30 may not be limited to one as described above referring to FIG. 2. For example, the data relay system 100 may include a plurality of local sites each of which is provided with the message relay worker 20 and the MFP 30 on the private network 104. In such case, the message queue server 10 may communicate with each one of the message relay workers 20 provided on the respective sites to relay a message of data obtaining request received from the portable device 40. Further, any portion of the private network 104 and/or the public network 102 may be located at any geographical location.

Further, in the above-described examples, the data request queue manager 13 may manage a request such as a data obtaining request using any desired type of data structure, such that the data structure is not limited to, for example, a first-in, first-out (FIFO) data structure. For example, the data request queue manager 13 may manage the data obtaining request using a last-in, first-out (LIFO) data structure.

Further, any of the above-described devices or units can be implemented as a hardware apparatus, such as a special-purpose circuit or device, or as a hardware/software combination, such as a processor executing a software program.

Further, as described above, any one of the above-described and other methods of the present invention may be embodied in the form of a computer program stored in any kind of storage medium. For example, any one of the above-described functions of the data relay system 100 may be implemented by an executable computer program, which may be written in any desired computer programming language such as the object-oriented programming language including C, C++, C#, and Java. Examples of storage mediums include, but are not limited to, flexible disk, hard disk, optical discs such as CD-ROM and DVD, magneto-optical discs, EEPROM, EPROM, magnetic tapes, nonvolatile memory cards, ROM (read-only-memory), etc. The computer programs may be distributed, for example, in the form of storage medium or over a network.

Alternatively, any one of the above-described and other methods of the present invention may be implemented by ASIC, prepared by interconnecting an appropriate network of conventional component circuits or by a combination thereof with one or more conventional general purpose microprocessors and/or signal processors programmed accordingly.

The message queue server 10 and the message relay worker 20 may be each implemented by a single computer. Alternatively, any number of parts, functions, or modules of the message queue server 10 and the message relay worker 20 may be classified into a desired number of groups to be carried out by a plurality of computers. The control programs to be installed onto the message queue server 10 and the message relay worker 20, which may be collectively referred to as the relay control program, may be transmitted, one module by one module, after dividing into a plurality of modules, or may be transmitted at once.

The illustrated data relay system is only illustrative of one of several computing environments for implementing the embodiments disclosed herein. For example, in some embodiments, the message queue server 10 includes a plurality of computing devices, e.g., a server cluster, that are configured to communicate with each other over any type of communications link, including a network, a shared memory, etc. to collectively perform the processes disclosed herein. Similarly, the message relay worker 20 can include a plurality of computing devices that are configured to communicate with each other.

For example, the process performed by the data request obtainer 22 of the message relay worker 20 at S3 of FIG. 3 may be performed by one computing device. The process performed by the data request queue manager 13 of the message queue server 10 at S4 of FIG. 3 may be performed by one computing device, which interacts with the computing device performing the process of S3. In another example, the process performed by the data transfer 16 of the message queue server 10 at S11 of FIG. 3 may be performed by one computing device.

Further, the functionality of the message queue server 10, which is described referring to FIG. 2, may be shared among one or more computing devices. Similarly, the functionality of the message relay worker 20, which is described referring to FIG. 2, may be shared among one or more computing devices.

Further, in the above-described example, the electronic data may be sent in response to a data transmit request for requesting transmit of the electronic data. Alternatively, the electronic data may be sent in various other ways, for example, at any desired time.

Further, each of the plurality of computing devices is configured to communicate with one or more external computing devices using any type of communication link, including any combination of wired and wireless communication links; using any type of network, including the Internet, a wide-area network (WAN), a local-area network (LAN), and a virtual private network (VPN); and using any combination of transmission techniques and communication protocols.

The present invention can be implemented in any convenient form, for example using dedicated hardware, or a mixture of dedicated hardware and software. The present invention may be implemented as computer software implemented by one or more networked processing apparatuses. The network can comprise any conventional terrestrial or wireless communications network, such as the Internet. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any storage medium for storing processor readable code such as a floppy disk, hard disk, CD ROM, magnetic tape device or solid state memory device.

The hardware platform includes any desired kind of hardware resources including, for example, a central processing unit (CPU), a random access memory (RAM), and a hard disk drive (HDD). The CPU may be implemented by any desired kind of any desired number of processor. The RAM may be implemented by any desired kind of volatile or non-volatile memory. The HDD may be implemented by any desired kind of non-volatile memory capable of storing a large amount of data. The hardware resources may additionally include an input device, an output device, or a network device, depending on the type of the apparatus. Alternatively, the HDD may be provided outside of the apparatus as long as the HDD is accessible. In this example, the CPU, such as a cashe memory of the CPU, and the RAM may function as a physical memory or a primary memory of the apparatus, while the HDD may function as a secondary memory of the apparatus.

In one example, the present invention may reside in a data relay system for transferring data stored in an image processing apparatus that resides on a local network to a portable device connected to an outside network according to a request received from the portable device, the system including: a client apparatus that resides on the local network and a server apparatus that resides on the outside network. The server apparatus includes: a data request queue manager to store a data obtaining request received from the portable device in a queue; a data request transfer to transfer the data obtaining request stored in the queue to the client apparatus in response to a request for obtaining the data obtaining request that is received from the client apparatus; and a data transfer to specify the portable device that sends the data obtaining request and to transmit the data to the specified portable device in response to a data transmit request for transmitting the data that is received from the client apparatus. The client apparatus includes: a data request obtainer to transmit the request for obtaining the data obtaining request to the server apparatus and to obtain the data obtaining request stored in the queue; a data obtainer to transmit the data obtaining request received from the server apparatus to the image processing apparatus and to obtain the data stored in the image processing apparatus; and a data transmit request to generate a data transmit request for requesting transmit of the data obtained from the image processing apparatus and to send the data transmit request to the server apparatus.

The server apparatus further includes a request interpreter to determine whether the request received from the outside apparatus is one of the data obtaining request, the request for obtaining the data obtaining request, and the data transmit request.

The request interpreter may determine a type of the request received from the outside apparatus, which may be generated as a HTTP request, based on path information of the HTTP request. Alternatively, the request interpreter determines a type of the request received from the outside apparatus, which may be generated as a HTTP request, based on a key and a value of a header section of the HTTP request.

The server apparatus further includes a user authenticator to authenticate a user of the portable device based on authentication information included in the data obtaining request. The data request queue manager stores the data obtaining request received from the portable device of the authenticated user in a queue designated to the user.

The image processing apparatus may be a multifunctional peripheral (MFP) provided with a document box. The data obtaining request requests the server apparatus to obtain the data stored in the document box. The data may be scan data obtained by the MFP through scanning.

In another example, the present invention may reside in an information processing apparatus that resides on a local network and transfers data stored in an image processing apparatus that resides on the local network to a portable device connected to an outside network according to a request received from the portable device. The information processing apparatus includes: a data request obtainer to transmit a request for obtaining a data obtaining request to a server apparatus that resides on the outside network and to obtain the data obtaining request received from the portable device and stored in a queue managed by the server apparatus; a data obtainer to transmit the data obtaining request received from the server apparatus to the image processing apparatus and to obtain the data stored in the image processing apparatus; and a data transmit request to generate a data transmit request for requesting transmit of the data obtained from the image processing apparatus and to send the data transmit request to the server apparatus.

In another example, the present invention may reside in a carrier medium, such as a recording medium, storing a computer program that controls a computer disposed on the local network to transfer data stored in an image processing apparatus that resides on the local network to a portable device connected to an outside network according to a request received from the portable device. The computer program causes the computer to perform the steps of: transmitting a request for obtaining a data obtaining request to a server apparatus that resides on the outside network; obtaining the data obtaining request received from the portable device and stored in a queue managed by the server apparatus; transmitting the data obtaining request received from the server apparatus to the image processing apparatus; obtaining the data stored in the image processing apparatus; generating a data transmit request for requesting transmit of the data obtained from the image processing apparatus; and sending the data transmit request to the server apparatus.

In one example, the present invention may reside in a data relay system configured to connect with a portable device through a first network, the system including: a server apparatus disposed on the first network; and a client apparatus disposed on a second network and configured to communicate with the server apparatus via a firewall. The server apparatus includes: a data request queue manager configured to receive a data obtaining request for obtaining electronic data stored in an image processing apparatus disposed on the second network from the portable device and to store the data obtaining request in a queue; a data request transfer device configured to transfer the data obtaining request stored in the queue to the client apparatus in response to a request for obtaining the data obtaining request that is received from the client apparatus; and a data transfer device configured to specify the portable device that sends the data obtaining request stored in the queue and to transmit the electronic data to the specified portable device in response to a data transmit request for requesting transmit of the electronic data that is received from the client apparatus. The client apparatus includes: a data request obtainer configured to transmit the request for obtaining the data obtaining request to the server apparatus and to obtain the data obtaining request stored in the queue from the server apparatus; a data obtainer configured to transmit the data obtaining request received from the server apparatus to the image processing apparatus and to obtain the electronic data stored in the image processing apparatus; and a data transmit request device configured to generate the data transmit request for requesting transmit of the electronic data and to send the data transmit request to the server apparatus.

In one example, in the above-described data relay system, the server apparatus further includes: a request interpreter configured to determine a type of a request received from an outside apparatus, the type being one of the data obtaining request received from the portable device, the request for obtaining the data obtaining request that is received from the client apparatus, and the data transmit request received from the client apparatus.

In one example, in the above-described data relay system, when the request received from the outside apparatus is an HTTP request, the request interpreter determines the type of the request based on path information of a header section of the HTTP request.

In one example, in the above-descried data relay system, when the request received from the outside apparatus is an HTTP request, the request interpreter determines the type of the request based on a key and a value of a header section of the HTTP request.

In one example, in the above-described data relay system, the server apparatus further includes: a user authenticator configured to authenticate a user of the portable device based on user authentication information included in the data obtaining request; and the data request queue manager stores the data obtaining request received from the portable device operated by the authenticated user in a queue designated to the authenticated user.

In one example, in the above-described data relay system, the image processing apparatus is to scan an original document into scan data using a scanner, and store the scan data in a memory as the electronic data to be transferred to the portable device.

In one example, a system includes the data relay system of any one of the above; and the portable device configured to access the server apparatus of the data relay system using address information assigned to the server apparatus, and to receive screen data from the server apparatus for display to a user, the electronic data to be specified by the data obtaining request being selected using the screen data.

In one example, the present invention may reside in: an information processing apparatus disposed on a first network and configured to communicate with a counterpart information processing apparatus disposed on a second network different from the first network via a firewall, the information processing apparatus including: a data request manager configured to receive, from an operation device connected to the first network, a data obtaining request for obtaining electronic data stored in an image processing apparatus disposed on the second network and to store the data obtaining request in a memory; a data request transfer unit configured to transfer the data obtaining request stored in the memory to the counterpart information processing apparatus, in response to a request for obtaining the data obtaining request received from the counterpart information processing apparatus; and a data transfer unit configured to specify the operation device that sends the data obtaining request stored in the memory and to transmit the electronic data to the specified operation device.

In one example, the information processing apparatus further includes: a request interpreter configured to determine a type of a request received from an outside apparatus, the type being one of the data obtaining request received from the operation device, the request for obtaining the data obtaining request that is received from the counterpart information processing apparatus, and a data transmit request received from the counterpart information processing apparatus.

In one example, in the information processing apparatus, when the request received from the outside apparatus is an HTTP request, the request interpreter determines the type of the request based on path information of a header section of the HTTP request.

In one example, in the information processing apparatus, when the request received from the outside apparatus is an HTTP request, the request interpreter determines the type of the request based on a key and a value of a header section of the HTTP request.

In one example, the information processing apparatus further includes: a user authenticator configured to authenticate a user of the operation device based on user authentication information included in the data obtaining request. The data request manager stores the data obtaining request received from the operation device operated by the authenticated user in a memory designated to the authenticated user.

In one example, the electronic data to be transferred to the operation device is scan data obtained through scanning an original document.

In one example, a system includes: the information processing apparatus of any one of the above; and the operation device configured to access the information processing apparatus using address information assigned to the information processing apparatus, and to receive screen data from the information processing apparatus for display to a user, the electronic data to be specified by the data obtaining request being selected using the screen data.

In one example, the present invention may reside in an information processing apparatus disposed on a second network different from a first network and configured to communicate with a counterpart information processing apparatus disposed on the first network via a firewall, the information processing apparatus including: a data request obtainer configured to transmit a request for obtaining a data obtaining request to the counterpart information processing apparatus, and to obtain the data obtaining request stored in a memory of the counterpart information processing apparatus, wherein the data obtaining request is transmitted from an operation device connected to the first network to request for obtaining electronic data stored in an image processing apparatus disposed on the second network; a data obtainer configured to obtain the electronic data stored in the image processing apparatus based on the data obtaining request obtained from the counterpart information processing apparatus; and a data transmit request unit configured to cause the electronic data be sent to the counterpart information processing apparatus. For example, the data transmit request unit may generate a data transmit request for requesting transmit of the electronic data and send the data transmit request to the counterpart information processing apparatus.

In one example, the present invention may reside in a method of relaying electronic data, including: receiving a data obtaining request for obtaining electronic data stored in an image processing apparatus disposed on a second network from an operation device connected to a first network, the second network being different from the first network; storing the data obtaining request in a memory on the first network; transferring the data obtaining request stored in the memory to an information processing apparatus disposed on the second network in response to a request for obtaining the data obtaining request that is received from the information processing apparatus; obtaining the electronic data stored in the image processing apparatus; identifying the operation device that sends the data obtaining request stored in the memory; and transmitting the electronic data to the identified operation device. For example, the electronic data may be obtained by extracting the electronic data from a data transmit request received from the information processing apparatus.

In one example, the method further includes: determining a type of a request received from an outside apparatus, the type being one of the data obtaining request received from the operation device, the request for obtaining the data obtaining request that is received from the information processing apparatus, and a data transmit request received from the information processing apparatus.

In one example, when the request received from the outside apparatus is an HTTP request, the method further includes: determining the type of the request based on path information of a header section of the HTTP request.

In one example, when the request received from the outside apparatus is an HTTP request, the method further includes: determining the type of the request based on a key and a value of a header section of the HTTP request.

In one example, the method further includes: authenticating a user of the operation device based on user authentication information included in the data obtaining request; and storing the data obtaining request received from the operation device operated by the authenticated user in a memory designated to the authenticated user.

In one example, the present invention may reside in a method of relaying electronic data, including: transmitting a request for obtaining a data obtaining request to an information processing apparatus disposed on a first network; obtaining the data obtaining request stored in a memory of the information processing apparatus, wherein the data obtaining request is transmitted from an operation device connected to the first network and requests obtaining electronic data stored in an image processing apparatus disposed on a second network different from the first network; transmitting the data obtaining request received from the information processing apparatus to the image processing apparatus; obtaining the electronic data stored in the image processing apparatus; and sending the electronic data to the information processing apparatus.

The method of relaying electronic data may further include: generating a data transmit request for requesting transmit of the electronic data; and sending the generated data transmit request to the information processing apparatus.

In one example, the present invention may reside in: a method of relaying electronic data, the method including: receiving, at a server apparatus disposed on a first network, a data obtaining request for obtaining electronic data stored in an image processing apparatus disposed on a second network different from the first network, from an operation device connected to the first network; storing the data obtaining request in a memory on the first network; transmitting a request for obtaining the data obtaining request from a client apparatus disposed on the second network to the server apparatus via a firewall; transferring the data obtaining request stored in the memory from the server apparatus to the client apparatus in response to the request for obtaining the data obtaining request; and transmitting the electronic data to the operation device that sends the data obtaining request.

The method of relaying electronic data may further include: transmitting the data obtaining request from the client apparatus to the image processing apparatus to obtain the electronic data stored in the image processing apparatus; and sending a data transmit request for requesting transmit of the electronic data obtained from the image processing apparatus, from the client apparatus to the server apparatus.

In one example, the present invention may reside in a carrier medium, such as a recording medium, storing a plurality of instructions which, when executed by a processor, cause the processor to perform a method of relaying electronic data, the method including: receiving a data obtaining request for obtaining electronic data stored in an image processing apparatus disposed on a second network from an operation device connected to a first network, the second network being different from the first network; storing the data obtaining request in a memory on the first network; transferring the data obtaining request stored in the memory to an information processing apparatus disposed on the second network, in response to a request for obtaining the data obtaining request received from the information processing apparatus; obtaining the electronic data from the information processing apparatus; identifying the operation device that sends the data obtaining request stored in the memory; and transmitting the electronic data to the identified operation device.

In one example, the electronic data to be transferred to the operation device is scan data obtained through scanning an original document.

In one example, the present invention may reside in a carrier medium, such as a recording medium, storing a plurality of instructions which, when executed by a processor, cause the processor to perform a method of relaying electronic data, the method including: transmitting a request for obtaining a data obtaining request to an information processing apparatus disposed on a first network; obtaining the data obtaining request stored in a memory of the information processing apparatus, wherein the data obtaining request is transmitted from an operation device connected to the first network and requests obtaining electronic data stored in an image processing apparatus disposed on a second network different from the first network; transmitting the data obtaining request received from the information processing apparatus to the image processing apparatus; obtaining the electronic data stored in the image processing apparatus; and sending the electronic data to the information processing apparatus.

In one example, the present invention may reside in a carrier medium, such as a recording medium, storing a plurality of instructions which, when executed by a processor, cause the processor to perform a method of relaying electronic data, the method including: receiving, at a server apparatus disposed on a first network, a data obtaining request for obtaining electronic data stored in an image processing apparatus disposed on a second network different from the first network, from a operation device connected to the first network; storing the data obtaining request in a memory on the first network; transmitting a request for obtaining the data obtaining request from a client apparatus disposed on the second network to the server apparatus via a firewall; transferring the data obtaining request stored in the memory from the server apparatus to the client apparatus in response to the request for obtaining the data obtaining request; and transmitting the electronic data to the operation device that sends the data obtaining request.

In one example, the present invention may reside in a data relay system configured to connect with an operation device through a first network, the system including: a server disposed on the first network; and a client disposed on a second network different from the first network and configured to communicate with the server via a firewall. The server includes: a data request manager configured to receive, from the operation device, a data obtaining request for obtaining electronic data stored in an image processing apparatus disposed on the second network and to store the data obtaining request in a storage area; a data request transfer unit configured to transfer the data obtaining request stored in the storage area to the client, in response to a request for obtaining the data obtaining request received from the client; and a data transfer unit configured to specify the operation device that sends the data obtaining request stored in the storage area and to transmit the electronic data to the specified operation device. The client includes: a data request obtainer configured to transmit the request for obtaining the data obtaining request to the server and to obtain the data obtaining request stored in the storage area from the server; a data obtainer configured to obtain the electronic data stored in the image processing apparatus based on the data obtaining request obtained from the server; and a data transmit request unit configured to send the electronic data to the server.

In the data relay system, the data transmit request unit of the client generates a data transmit request for requesting transmit of the electronic data to cause the electronic data be sent to the server.

In the data relay system, the server further comprises a request interpreter configured to determine a type of a request received from the outside, the type being one of the data obtaining request received from the operation device, the request for obtaining the data obtaining request that is received from the client, and the data transmit request received from the client.

In the data relay system, when the request received from the outside is an HTTP request, the request interpreter determines the type of the request based on path information of a header section of the HTTP request.

In the data relay system, when the request received from the outside is an HTTP request, the request interpreter determines the type of the request based on a key and a value of a header section of the HTTP request.

In the data relay system, the server further includes: a user authenticator configured to authenticate a user of the operation device based on user authentication information included in the data obtaining request; and the data request manager stores the data obtaining request received from the operation device operated by the authenticated user in a storage area designated to the authenticated user.

A system includes the data relay system of any one of the above, and the operation device configured to access the server of the data relay system using address information assigned to the server, and to receive screen data from the server for display to a user, the electronic data to be specified by the data obtaining request being selected using the screen data.

In one example, the present invention may reside in a data relay system configured to connect with an operation device through a first network. The system includes: at least one server apparatus disposed on the first network and configured to include one or more first processors; and at least one client apparatus disposed on a second network different from the first network and configured to include one or more second processors, the at least one client apparatus communicating with the at least one server apparatus via a firewall. The one or more first processors of the at least one server apparatus are configured to: receive, from the operation device, a data obtaining request for obtaining electronic data stored in an image processing apparatus disposed on the second network and to store the data obtaining request in a memory; transfer the data obtaining request stored in the memory to the at least one client apparatus, in response to a request for obtaining the data obtaining request received from the at least one client apparatus; and specify the operation device that sends the data obtaining request stored in the memory and to transmit the electronic data to the specified operation device. The one or more second processors of the at least one client apparatus are configured to: transmit the request for obtaining the data obtaining request to the at least one server apparatus and to obtain the data obtaining request stored in the memory from the at least one server apparatus; obtain the electronic data stored in the image processing apparatus based on the data obtaining request obtained from the at least one server apparatus; and send the electronic data to the at least one server apparatus.

In the data relay system, the one or more second processors of the at least one client apparatus generate a data transmit request for requesting transmit of the electronic data to cause the electronic data be sent to the at least one server apparatus.

In the data relay system, the one or more first processors of the at least one server apparatus is further configured to determine a type of a request received from an outside apparatus, the type being one of the data obtaining request received from the operation device, the request for obtaining the data obtaining request that is received from the at least one client apparatus, and the data transmit request received from the at least one client apparatus.

In the data relay system, when the request received from the outside apparatus is an HTTP request, the one or more first processors determine the type of the request based on path information of a header section of the HTTP request.

In the data relay system, when the request received from the outside apparatus is an HTTP request, the one or more first processors determines the type of the request based on a key and a value of a header section of the HTTP request.

In the data relay system, the one or more first processors of the at least one server apparatus are further configured to: authenticate a user of the operation device based on user authentication information included in the data obtaining request; and store the data obtaining request received from the operation device operated by the authenticated user in a memory designated to the authenticated user.

The data relay system may further include the image processing apparatus configured to scan an original document into scan data using a scanner, and store the scan data in a memory as the electronic data to be transferred to the operation device.

In one example, the present invention may reside in a system including the data relay system of any one of the above, and the operation device configured to access the at least one server apparatus of the data relay system using address information assigned to the at least one server apparatus, and to receive screen data from the at least one server apparatus for display to a user, the electronic data to be specified by the data obtaining request being selected using the screen data.

## Claims

1. A method of relaying electronic data, comprising:
receiving (S1, S101), from an operation device (40) connected to a first network (102), a data obtaining request for obtaining electronic data stored in an image processing apparatus (30) disposed on a second network (104), the second network (104) being different from the first network (102);
storing (S2) the data obtaining request in a memory (14, 604) on the first network (102);
transferring (S4, S104), in response to a request for obtaining the data obtaining request sent from a client apparatus (20) disposed on the second network (104), the data obtaining request stored in the memory (14, 604) to the client apparatus (20);
obtaining (S9) the electronic data stored in the image processing apparatus (30), the electronic data being obtained by the client apparatus (20) based on the data obtaining request; and
transmitting (S11) the electronic data to the operation device (40) that sends the data obtaining request stored in the memory (14, 604).

2. The method of claim 1, further comprising:
receiving (S9) a data transmit request for requesting transmit of the electronic data from the client apparatus (20), the data transmit request causing the electronic data be transmitted to the identified operation device (40).

3. The method of claim 2, further comprising:
determining (S102) a type of a request received from an outside apparatus, the type being one of the data obtaining request received from the operation device (40), the request for obtaining the data obtaining request that is received from the client apparatus (20), and the data transmit request received from the client apparatus (20).

4. The method of claim 3, wherein, when the request received from the outside apparatus is an HTTP request, the method further comprising:
determining the type of the request based on path information of a header section of the HTTP request.

5. The method of claim 3, wherein, when the request received from the outside apparatus is an HTTP request, the method further comprising:
determining the type of the request based on a key and a value of a header section of the HTTP request.

6. The method of any one of claims 1 to 5, further comprising:
authenticating a user of the operation device (40) based on user authentication information included in the data obtaining request; and
storing the data obtaining request received from the operation device (40) operated by the authenticated user in a memory (14, 604) designated to the authenticated user.

7. A server apparatus (10) disposed on the first network (102) and configured to communicate with the client apparatus (20) disposed on the second network (104) different from the first network (102) via the firewall (106), the server apparatus (10) being characterized to perform the data relaying method of any one of claims 1 to 6.

8. A carrier medium (604, 608, 605, 603a) carrying computer readable code for controlling a computer to carryout the data relaying method of any one of claims 1 to 6.

9. A method of relaying electronic data, comprising:
transmitting a request for obtaining a data obtaining request to a server apparatus (10) disposed on a first network (102);
obtaining (S4) the data obtaining request stored in a memory (14, 604) disposed on the first network (102), wherein the data obtaining request is transmitted from an operation device (40) connected to the first network (102) and requests obtaining electronic data stored in an image processing apparatus (30) disposed on a second network (104) different from the first network (102);
obtaining (S7) the electronic data stored in the image processing apparatus (30), based on the data obtaining request obtained from the memory (14, 604); and
sending the electronic data to the server apparatus (10), the electronic data being transmitted to the operation device (40).

10. The method of claim 9, wherein the obtaining the electronic data includes:
generating (S5) a data transmit request for requesting transmit of the electronic data; and
sending (S9) the generated data transmit request to the server apparatus (10).

11. A client apparatus (20) disposed on the second network (104) different from the first network (102) and configured to communicate with the server apparatus (10) disposed on the first network (102) via the firewall (106), the client apparatus (20) configured to perform the data relaying method of any one of claims 9 and 10.

12. A carrier medium (604, 608, 605, 603a) carrying computer readable code for controlling a computer to carryout the data relaying method of any one of claims 9 and 10.

13. A data relay system comprising:
the server apparatus (10) of claim 7; and
the client apparatus (20) of claim 11.

14. A system, comprising:
the data relay system of claim 13; and
the operation device (40) configured to access the server apparatus (10) of the data relay system using address information assigned to the server apparatus (10), and to receive screen data from the server apparatus (10) for display to a user, the electronic data to be specified by the data obtaining request being selected using the screen data.
